# EUROPEAN PATENT SPECIFICATION

(11) **EP 4 194 228 B1**
(45) Date of publication and mention of the grant of the patent: **22.01.2025**
(21) Application number: 22198577.3
(22) Date of filing: 29.09.2022
(51) Int. Cl.: B60C 11/00, B60C 19/00

(54) **PNEUMATIC TYRE**
LUFTREIFEN
PNEUMATIQUE

(30) Priority: 07.12.2021 JP 2021198783
(43) Date of publication of application: 14.06.2023
(73) Proprietor: Sumitomo Rubber Industries, Ltd., Kobe-shi, Hyogo 651-0072 (JP)
(72) Inventor: IWAMOTO, Naoki, Kobe-shi, 651-0072 (JP)
(74) Representative: Manitz Finsterwald Patent- und Rechtsanwaltspartnerschaft mbB

(56) References cited:
- EP-A1- 1 659 004
- EP-A1- 3 501 858
- EP-A2- 2 452 834
- US-A1- 2006 231 185

## Description

### FIELD OF THE INVENTION

The present invention relates to a pneumatic tyre.

### BACKGROUND OF THE INVENTION

JP 2012-86600 A discloses a pneumatic tyre. The pneumatic tyre includes a circumferentially extending band-shaped noise damper that is made of sponge material. The noise damper is fixed to the inner surface of the tread portion in the tyre radial direction.

EP 2 452 834 A2 discloses a pneumatic tyre according to the preamble of claim 1. EP 1 659 004 A1 and EP 3 501 858 A1 respectively disclose a pneumatic tyre having a noise damper made of a sponge and disposed in an inner space of the tyre.

### SUMMARY OF THE INVENTION

The noise damper can convert the vibration energy of the air in the tyre cavity into heat energy to reduce tyre noise such as resonance noise. Thus, the tread rubber to which the noise damper is fixed easily stores heat during running. As the heat storage property of the tread rubber is increased, there is a problem that the durability of the tread portion may deteriorate.

The present invention has been made in view of the above circumstances and has a maj or object to provide a pneumatic tyre capable of improving noise performance and durability.

A pneumatic tyre according to the present invention is defined in claim 1 and includes a tread portion having a tread rubber and a tyre inner cavity surface, and a noise damper made of a porous material fixed to the tyre inner cavity surface. The tread rubber includes an outer tread rubber having a ground-contacting surface, and an inner tread rubber disposed inwardly in the tyre radial direction of the outer tread rubber and outwardly in the tyre radial direction of the noise damper. A loss tangent tan δ of the inner tread rubber at 30 degrees C is smaller than a loss tangent tan δ of the outer tread rubber at 30 degrees C. A pair of ends in a tyre axial direction of the inner tread rubber is arranged inwardly in the tyre axial direction of a pair of outer ends in the tyre axial direction of the noise damper.

Preferable embodiments are defined in the dependent claims.

### BRIEF DESCRIPTION OF THE DRAWINGS

FIG. 1 is a tyre meridian cross-sectional view showing an embodiment of a pneumatic tyre; and
FIG. 2 is a partial enlarged view of a tread portion with a noise damper of FIG. 1.

### DETAILED DESCRIPTION OF THE INVENTION

Hereinafter, one or more embodiments of the present invention will be described with reference to the drawings.

Note that the drawings may contain exaggerated representations that differ from the actual structural dimensional ratios to aid in understanding the content of the invention. Further, throughout the embodiments, the same or common elements are denoted by the same reference numerals, and duplicate description may be omitted. Furthermore, the specific configurations shown in the embodiments and drawings are for understanding the contents of the present invention, and the present invention is not limited to the specific configurations shown but to the embodiments covered by the scope of the appended claims.

### [Pneumatic tyre (The first embodiment)]

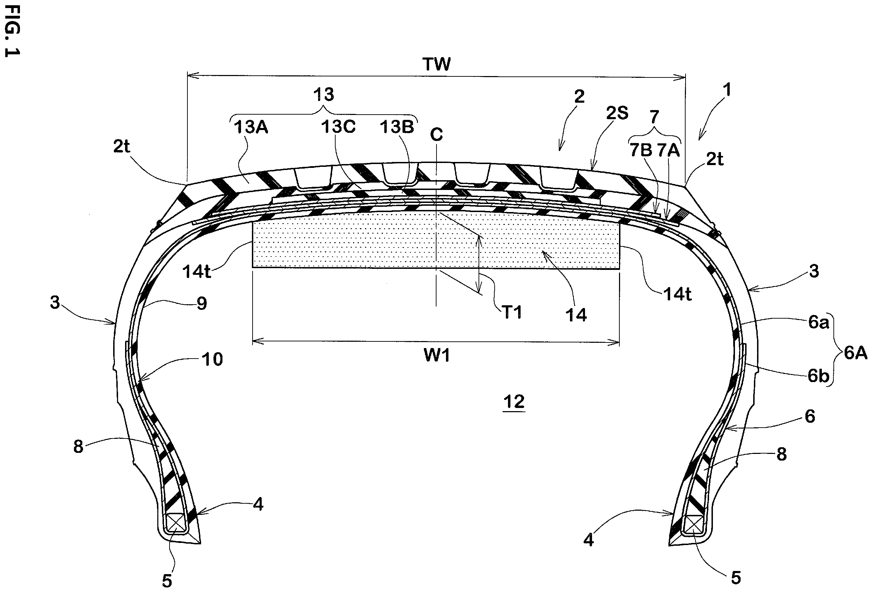

FIG. 1 is a tyre meridian cross-sectional view showing an embodiment of a pneumatic tyre (hereinafter, simply referred to as "tyre") 1. The tyre 1 according to the present embodiment is exemplified as a pneumatic tyre for passenger car, for example. However, the tyre 1 is not limited to such an aspect, and may be a pneumatic tyre for heavy load and the like, for example.

As illustrated in FIG. 1, the tyre 1 includes a tread portion 2. Further, the tyre 1 according to the present embodiment includes a carcass 6 and a belt layer 7.

### [Carcass]

In the present embodiment, the carcass 6 extending between a pair of bead portions 4. In the present embodiment, the carcass 6 includes at least one carcass ply. In this embodiment, the carcass 6 is composed of a single carcass ply 6A.

In the present embodiment, the carcass ply 6A includes a main portion 6a extending between bead cores 5 each disposed in a respective one of the bead portions 4, through the tread portion 2 and a pair of sidewall portions 3, and a pair of turned-up portions 6b connected to the main portion 6a and each turned up around the bead core 5 from axially inside to outside of the tyre. In each bead portion 4, a bead apex rubber 8 which extends from the bead core 5 is disposed between the main portion 6a and the turn-up portion 6b.

In the present embodiment, the carcass ply 6A, for example, includes a plurality of carcass cords (not illustrated) oriented at an angle of from 80 to 90 degrees with respect to the tyre equator C. As the carcass cords, organic fiber cords such as aromatic polyamides and rayon may be used, for example.

In the present embodiment, an inner liner rubber 10 which forms a tyre inner cavity surface 9 is arranged inside the carcass 6. The inner liner rubber 10 is composed of airimpermeable rubber such as butyl rubber so that the filled air of the tyre 1 can be kept airtight.

### [Belt layer]

In the present embodiment, the belt layer 7 is disposed outwardly in the tyre radial direction of the carcass 6 in the tread portion 2. In the present embodiment, the belt layer 7 is composed of two belt plies consisting of a radially inner belt ply 7A and a radially outer belt ply 7B.

In the present embodiment, each of the belt plies 7A and 7B has a plurality of belt cords (not illustrated) which, for example, is oriented at an angle of from 10 to 35 degrees with respect to the tyre circumferential direction. These belt piles 7A and 7B are superimposed such that the belt cords of the belt ply 7A and the belt cords of the belt ply 7A cross with each other. As the belt cords, for example, steel, aramid, rayon, etc. may be preferably adopted.

### [Tread portion]

In the present embodiment, the tread portion 2 has a pair of tread edges 2t. The pair of tread edges 2t is the axial outermost edges of the tread ground-contacting surface 2S of the tyre 1 which occurs under the condition such that the tyre 1 under a normal state is grounded on a plane with a standard tyre load at zero camber angles. In the normal state, the distance between the tread edges 2t and 2t in the tyre axial direction is defined as the tread ground-contacting width TW.

As used herein, the "normal state" is such that the tyre 1 is mounted onto a standard wheel rim with a standard pressure but loaded with no tyre load. As used herein, unless otherwise noted, dimensions of portions of the tyre are values measured under the normal state. In addition, the dimensions of each portion of the tyre shall allow the normal error contained in a rubber molded product.

As used herein, the "standard wheel rim" is a wheel rim officially approved for each tyre by standards organizations on which the tyre 1 is based. For example, the standard wheel rim is the "standard rim" specified in JATMA, the "Design Rim" in TRA, and the "Measuring Rim" in ETRTO.

As used herein, the "standard pressure" is a standard pressure officially approved for each tyre by standards organizations on which the tyre 1 is based. For example, the standard pressure is the "maximum air pressure" in JATMA, the maximum pressure given in the "Tire Load Limits at Various Cold Inflation Pressures" table in TRA, and the "Inflation Pressure" in ETRTO.

As used herein, the "standard tyre load" is a tyre load officially approved for each tyre by the standards organization in which the tyre 1 is based. For example, the standard tyre load is the "maximum load capacity" in JATMA, the maximum value given in the above-mentioned table in TRA, and the "Load Capacity" in ETRTO, for example.

In the present embodiment, the tyre 1 includes a tread rubber 13 and a noise damper 14.

### [Noise damper]

In the present embodiment, the noise damper 14 is fixed to a tyre inner cavity surface 9 of the tread portion 2. In the present embodiment, the noise damper 14 is formed in a band shape with a bottom surface fixed to the tyre inner cavity surface 9 and extends in the tyre circumferential direction. Further, the noise damper 14 includes a pair of outermost ends (not illustrated) on both sides in the tyre circumferential direction, which is butt-jointed with each other to form a substantially annular shape. The pair of outermost ends may be separated in the tyre circumferential direction.

In the present embodiment, the noise damper 14 has substantially the same cross-sectional shape at each position in the tyre circumferential direction except for the pair of outer ends (not illustrated) in the tyre circumferential direction. However, the noise damper is not limited to such an aspect. In addition, the cross-sectional shape of the noise damper 14 can be set as appropriate. In the present embodiment, the noise damper 14 has a flat horizontal shape (in this embodiment, a horizontally long rectangular shape) in which a thickness in the tyre radial direction (the maximum thickness T1) is smaller than a width in the tyre axial direction (the maximum width W1). As a result, the noise damper 14 can be prevented from collapsing or deforming during tyre running.

In the present embodiment, the noise damper 14 is made of a porous material. As the porous material, a porous sponge material may be exemplified. The sponge material has a spongy porous structure. In addition, the sponge material includes, for example, the so-called sponge itself obtained by foaming rubber or synthetic resin, as well as those in which animal fibers, plant fibers, synthetic fibers, etc. are entwined and integrally connected.

As the sponge material, synthetic resin sponges such as ether-based polyurethane sponges, ester-based polyurethane sponges, and polyethylene sponges, and chloroprene rubber sponges (CR sponges) may be adopted. Other examples of sponge materials may include ethylene propylene rubber sponge (EDPM sponge) and nitrile rubber sponge (NBR sponge). In particular, polyurethane-based or polyethylene-based sponges including ether-based polyurethane sponges are preferable from the viewpoints of sound control (noise performance), light weight, controllability of foaming, and durability.

The porous material (sponge material in this example) is easily deformed by shrinkage or bending. Thus, the noise damper 14 can deform flexibly following the deformation of the inner liner rubber 10 during running.

The noise damper 14 made of such a porous material can convert the air vibration in the tyre cavity 12 into heat energy to reduce it by its surface and internal holes (cells). This can reduce the noise inside the vehicle due to the resonance of the air. Further, the noise damper 14 can alleviate the impact received from the tread portion 2 while running, and the road noise can be reduced. Thus, in the present embodiment, the tyre 1 can improve noise performance.

The noise damper 14 generates heat during running because it converts the air vibration in the tyre cavity 12 into heat energy to exert a sound control effect. When the heat of the noise damper 14, for example, is propagated to the tread edge 2t sides of the tread rubber 13, which tend to generate a large amount of heat during running, the heat storage amount of the tread rubber 13 on the tread edge 2t sides may increase and be difficult to improve durability. Thus, it is preferable that outer ends 14t of the noise damper 14 in the tyre axial direction are arranged inside the tyre axial direction rather than the tread edges 2t. As a result, the tyre 1 according to the present embodiment can suppress the increase in the amount of heat storage on the tread edge 2t sides of the tread rubber 13, and the durability can be improved.

Preferably, a maximum width W1 in the tyre axial direction of the noise damper 14 is in a range from 70% to 95% of the tread ground-contacting width TW. By setting the maximum width W1 of the noise damper equal to or less than 95% of the tread ground-contacting width TW, the heat of the noise damper 14 can be suppressed from being propagated to the tread edge 2t sides of the tread rubber 13, and the durability can be improved. By setting the maximum width W1 of the noise damper 14 equal to or more than 70% of the tread ground-contacting width TW, air vibration in the tyre cavity 12 can be absorbed effectively and the noise performance can be improved. From this point of view, the maximum width W1 of the noise damper 14 is more preferably equal to or less than 90% of the tread ground-contacting width TW, also preferably equal to or more than 75%.

Preferably, the maximum thickness T1 of the noise damper 14 in the tyre radial direction is equal to or less than 70 mm. As a result, it is possible to suppress the increase in heat generation of the noise damper 14, and the durability can be improved. Preferably, the maximum thickness T1 is equal to or more than 40 mm. As a result, the noise damper 14 can efficiently absorb the air vibration in the tyre cavity 12, and the noise performance can be improved. From this point of view, the maximum thickness T1 is preferably 60 mm or less, and preferably 50 mm or more.

### [Tread rubber]

In the present embodiment, the tread rubber 13 is disposed in the tread portion 2. In the present embodiment, the tread rubber 13 is disposed outwardly in the tyre radial direction of the belt layer 7.

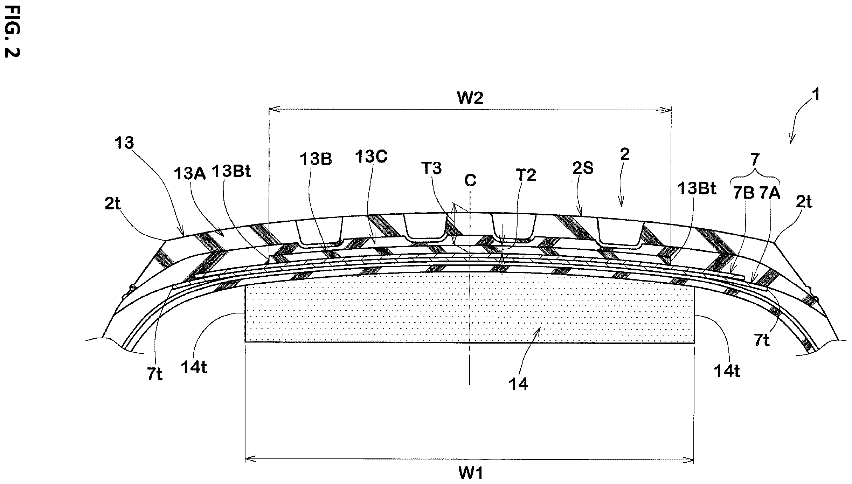

In the present embodiment, the tread rubber 13 includes an outer tread rubber 13A and an inner tread rubber 13B. Further, in the present embodiment, the tread rubber 13 includes a middle tread rubber 13C. FIG. 2 is a partial enlarged view of the tread portion 2 with a noise damper 14 of FIG. 1.

In the present embodiment, the outer tread rubber 13A constitutes the tread ground-contacting surface 2S. In the present embodiment, the outer tread rubber 13A extends outwardly in the tyre axial direction beyond both outer ends 7t of the belt layer 7 in the tyre axial direction.

The inner tread rubber 13B is disposed inwardly in the tyre radial direction of the outer tread rubber 13A and is disposed outwardly in the tyre radial direction of the noise damper 14. In the present embodiment, the inner tread rubber 13B is arranged adjacent to the belt layer 7.

The middle tread rubber 13C is disposed between the outer tread rubber 13A and the inner tread rubber 13B. In the present embodiment, the middle tread rubber 13C extends in the tyre axial direction beyond the outer ends 13Bt in the tyre axial direction of the inner tread rubber 13B as well as the outer ends 7t in the tyre axial direction of the belt layer 7.

Rubber compositions of the outer tread rubber 13A, the inner tread rubber 13B and the middle tread rubber 13C are not particularly limited. The rubber compositions include a rubber base material, a reinforcing agent (filler), a cross-linking agent, and a vulcanization accelerator. As the rubber base material, for example, diene-based rubbers such as natural rubber, butadiene rubber, isoprene rubber, and styrene-butadiene rubber, and a mixture thereof can be adopted. As the reinforcing agent (filler), for example, carbon, silica, or the like can be adopted. As the cross-linking agent, for example, sulfur can be adopted. As the vulcanization accelerator, for example, thiazole-based, guanidine-based, sulfenamide-based, thiuram-based, etc. can be adopted.

As mentioned above, the noise damper 14 generates heat while running. Thus, the tread rubber 13 to which the noise damper 14 is fixed easily stores heat by transmitting heat from the noise damper 14. When the heat storage property of the tread rubber 13 becomes large, the durability of the tread portion 2 tends to deteriorate.

In the present embodiment, a loss tangent tan δ of the inner tread rubber 13B at 30 degrees C is set smaller than a loss tangent tan δ of the outer tread rubber 13A at 30 degrees C. The loss tangent tan δ at 30 degrees C can be set, for example, by adjusting the amount of the above-mentioned reinforcing agent or cross-linking agent added, and the type and amount of vulcanization accelerator added.

In this specification, a loss tangent tan δ at 30 degrees C is a value measured using a viscoelastic spectrometer manufactured by Iwamoto Seisakusho Co., Ltd. under the following conditions in accordance with the provisions of JIS-K6394.
Initial distortion: 10%
Amplitude: plus/minus 2%
Frequency: 10Hz
Deformation mode: Tension
Measurement temperature: 30 degrees C

In the present embodiment, since a loss tangent tan δ at 30 degrees C of the inner tread rubber 13B is set smaller than a loss tangent tan δ at 30 degrees C of the outer tread rubber 13A, the heat generation of the inner tread rubber 13B at the start of running can be suppressed compared to the outer tread rubber 13A. Thus, by arranging the inner tread rubber 13B made of such a low heat generation rubber outward in the tyre radial direction of the noise damper 14, the heat stored in the tread rubber 13 can be suppressed by receiving the heat from the noise damper 14, which generates heat while running. As a result, in the present embodiment, the tyre 1 can suppress the increase in heat storage property of the tread rubber 13, and the durability of the tread portion 2 can be improved. Thus, in the present embodiment, the tyre 1 can improve the noise performance and durability.

In order to further improve the above-mentioned effect, the loss tangent tan δ of the inner tread rubber 13B at 30 degrees C is preferably equal to or less than 0.15. By setting the loss tangent tan δ of the inner tread rubber 13B at 30 degrees C being equal to or less than 0.15, the inner tread rubber 13B can further suppress heat generation while running. This can reduce the heat storage of the tread rubber 13 and improve the durability of the tread portion 2. From this point of view, the loss tangent tan δ of the inner tread rubber 13B at 30 degrees C is preferably equal to or less than 0.13.

Further, the loss tangent tan δ of the inner tread rubber 13B at 30 degrees C is preferably equal to or more than 0.10, for example. As a result, the deformation of the inner tread rubber 13B during running can be suppressed from becoming smaller than necessary, and steering stability can be maintained.

On the other hand, if the loss tangent tan δ of the outer tread rubber 13A at 30 degrees C is larger than the loss tangent tan δ of the inner tread rubber at 30 degrees C, the value can be set appropriately. In the present embodiment, the loss tangent tan δ of the outer tread rubber 13A at 30 degrees C can be set to, for example, 0.13 to 0.30 from the viewpoint of improving steering stability.

Preferably, a pair of outer ends 13Bt in the tyre axial direction of the inner tread rubber 13B is located inwardly in the tyre axial direction of the tread edges 2t of the tread portion 2. As a result, it is possible to suppress the placement of the inner tread rubber 13B, which has a relatively small deformation (loss tangent tan δ), on the tread edges 2t side where the ground pressure is relatively large during cornering. Thus, the tyre has a larger grip when cornering and the steering stability can be maintained.

Further, the pair of outer ends 13Bt of the inner tread rubber 13B is located inwardly in the tyre axial direction of the pair of outer ends 14t in the tyre axial direction of the noise damper 14. As a result, the tyre axial region of the inner tread rubber 13B with respect to the noise damper 14 may be suppressed from becoming larger than necessary, and the steering stability can be maintained.

Preferably, the maximum width W2 in the tyre axial direction of the inner tread rubber 13B is in a range from 70% to 90% of the maximum width W1 in the tyre axial direction of the noise damper 14. By setting the maximum width W2 of the inner tread rubber 13B to 90% or less of the maximum width W1 of the noise damper 14, the inner tread rubber 13B does not become larger than necessary and the steering stability can be maintained. Further, by setting the maximum width W2 of the inner tread rubber 13B to 70% or more of the maximum width W1 of the noise damper 14, it can be suppressed that the heat storage property of the tread rubber 13 increases, and the durability of tread portion 2 can be improved. From this point of view, the maximum width W2 of the inner tread rubber 13B is preferably equal to or less than 85% of the maximum width W1 of the noise damper 14, and preferably equal to or more than 75%.

Preferably, the maximum thickness T2 (the maximum thickness in the tyre radial direction) of the inner tread rubber 13B is equal to or less than 20% of the maximum thickness T3 (the maximum thickness in the tyre radial direction) of the tread rubber 13. As a result, the ratio of the inner tread rubber 13B in the tread rubber 13 can be suppressed from becoming more than necessary, and the steering stability can be maintained. Further, the maximum thickness T2 of the inner tread rubber 13B is preferably equal to or more than 8% of the maximum thickness T3 of the tread rubber 13. This can suppress the increase in heat storage of the tread rubber 13 and improve the durability of the tread portion 2. From this point of view, the maximum thickness T2 of the inner tread rubber 13B is preferably equal to or less than 15% and preferably equal to or more than 10% of the maximum thickness T3 of the tread rubber 13.

In the present embodiment, a loss tangent tan δ of the inner tread rubber 13B at 30 degrees C is set smaller than a loss tangent tan δ of the middle tread rubber 13C at 30 degrees C. As a result, the inner tread rubber 13B can suppress heat generation from the start of running compared to the middle tread rubber 13C. Thus, the inner tread rubber 13B can suppress the heat storage of the tread rubber 13 due to the heat generated from the noise damper 14 during running, and the durability of the tyre can be improved.

Preferably, a loss tangent tan δ of the middle tread rubber 13C at 30 degrees C is set larger than a loss tangent tan δ of the outer tread rubber 13A at 30 degrees C. As a result, in the outer tread rubber 13A, the inner tread rubber 13B and the middle tread rubber 13C which constitute the tread rubber 13, the loss tangent tan δ of the middle tread rubber 13C at 30 degrees C is set to be the largest. Thus, the heat generation in the outer tread rubber 13A can be suppressed. With this, heat transfer from the noise damper 14 to the tread rubber 13 can be suppressed, and the durability of the tread portion 2 can be improved. In order to effectively exert such an effect, the loss tangent tan δ of the middle tread rubber 13C at 30 degrees C is set to, for example, 0.20 to 0.40.

### [Pneumatic tyre (second embodiment)]

The tread rubber 13 in accordance with the previous embodiment is provided with the middle tread rubber 13C between the outer tread rubber 13A and the inner tread rubber 13B, but is not limited to such an embodiment. For example, the middle tread rubber 13C may be omitted. In such a tyre 1, similar to the tyre 1 of the previous embodiment, a loss tangent tan δ of the inner tread rubber 13B at 30 degrees C is set smaller than a loss tangent tan δ of the outer tread rubber 13A at 30 degrees C. This can suppress the increase in heat storage of the tread rubber 13 and improve the durability of the tread portion 2.

### [Example]

### [Example A]

Pneumatic tyres shown in FIG. 1 were prepared based on the specifications in Table 1 (Examples 1 to 8). For comparison, a pneumatic tyre with the same loss tangent tan δ at 30 degrees C of the inner tread rubber and the loss tangent tan δ at 30 degrees C of the outer tread rubber was also prepared (comparative example).

Then, durability, noise performance and steering stability performance were evaluated for each test tyre. The specifications of each tyre are the same except for the configurations shown in Table 1, and the tyre sizes, etc. are as follows. Further, the test methods are as follows. The test results are shown in Table 1.
Tire size: 225/65R17 102H
Rim size: 17x5.5J
Internal pressure: 230 kPa
Vehicle: Passenger car with 2000cc displacement
Tread ground-contacting width TW: 180 mm
Maximum thickness of tread rubber T3: 11.5 mm
Inner tread rubber:
   Maximum width W2 / maximum width W1 of noise damper: 90%
   Maximum thickness T2 / maximum tread rubber thickness T3: 10%
   Position of outer ends in tyre axial direction: inside in tyre axial direction than tread edges
Outer tread rubber:
   Loss tangent tan δ at 30 degrees C: 0.20
Middle tread rubber:
   Loss tangent tan δ at 30 degrees C: 0.30

### Durability (high-speed durability) test:

In a drum running tester, each test tyre filled with the above internal pressure was run with a load of 6.67 kN, and the speed is increased by 10 km/h every 10 minutes from 80 km/h. Then, the running time until the tyre was damaged was measured. The evaluation is shown by an index with the running time of Example 1 as 100. The larger the value, the higher the durability (high-speed durability). The evaluation 80 or more indicates better durability.

### Noise performance test:

The noise (vehicle exterior noise) when the above-mentioned vehicle equipped with each test tyre set under the above conditions was run on a test course on a dry road (running speed: 30 km/h) was evaluated by the driver's sensory. The evaluation is shown by a score with Example 1 as 100. The larger the value, the better. The evaluation 80 or more indicates better noise performance.

### Steering stability test:

The above-mentioned vehicle equipped with each test tyre set under the above conditions was run on a test course on a dry road (running speed: 40 to 80 km / h). Then, the steering stability (responsiveness, rigidity, grip force, stability, and transient characteristics) at that time was evaluated by the sensuality of the test driver. The evaluation is shown by a score with Example 1 as 100, and the larger the value, the better. The evaluation 80 or higher indicates that the vehicle has the required performance.

**[Table 1]**

| | Comparative example | Ex. 1 | Ex. 2 | Ex. 3 | Ex. 4 | Ex. 5 | Ex. 6 | Ex. 7 | Ex. 8 |
|---|---|---|---|---|---|---|---|---|---|
| Loss tangent tan δ of inner tread rubber at 30 degrees C | 0.30 | 0.15 | 0.13 | 0.15 | 0.15 | 0.15 | 0.15 | 0.15 | 0.15 |
| Maximum width W1 of noise damper / tread ground-contacting width TW (%) | 80 | 80 | 80 | 50 | 70 | 95 | 110 | 80 | 80 |
| Maximum thickness T1 of noise damper (mm) | 50 | 50 | 50 | 50 | 50 | 50 | 50 | 70 | 80 |
| Durability (index) | 70 | 100 | 105 | 105 | 102 | 90 | 80 | 90 | 80 |
| Noise performance (index) | 100 | 100 | 100 | 80 | 95 | 103 | 110 | 103 | 105 |
| Steering stability (index) | 105 | 100 | 98 | 100 | 100 | 100 | 100 | 100 | 100 |
| Comprehensive evaluation of durability and noise performance (index) | 170 | 200 | 205 | 185 | 197 | 193 | 190 | 193 | 185 |

As a result of the test, it was confirmed that Examples 1 to 8 were able to improve the noise performance and the durability (improve the overall evaluation) compared to the comparative example. Furthermore, some Examples which have a better loss tangent tan δ of the inner tread rubber, a better ratio of the maximum width W1 of the noise damper to the tread ground width TW, and a better maximum thickness T1 of the noise damper could improve noise performance, durability, and steering stability in a well-balanced manner as compared to the others.

### [Example B]

Pneumatic tyres shown in FIG. 1 were prepared based on the specifications in Table 2 (Example 9 to Example 14). Then, durability, noise performance and steering stability performance were evaluated for each test tyre. The specifications of each tyre are the same except for the configuration shown in Table 2, and the tyre size etc. are the same as in Example A except for the following. The test method is the same as in Example A. The test results are shown in Table 2.
Noise damper:
   Maximum width W1 / tread ground-contacting width TW: 80%
   Maximum thickness T1: 50 mm
Inner tread rubber:
   Loss tangent tan δ at 30 degrees C: 0.15
Outer tread rubber:
   Loss tangent tan δ at 30 degrees C: 0.20
Middle tread rubber:
   Loss tangent tan δ at 30 degrees C: 0.30

**[Table 2]**

| | Ex. 9 | Ex. 10 | Ex. 1 | Ex. 11 | Ex. 12 | Ex. 13 | Ex. 14 |
|---|---|---|---|---|---|---|---|
| Maximum width W2 of inner tread rubber / maximum width W1 of noise damper (%) | 50 | 70 | 90 | 100 | 90 | 90 | 90 |
| Location of outer ends of inner tread rubber (A: inside of tread edges, B: the same as tread edges) | A | A | A | A | B | A | A |
| Maximum thickness T2 of inner tread rubber / maximum thickness T3 of tread rubber (%) | 10 | 10 | 10 | 10 | 10 | 20 | 30 |
| Durability (index) | 80 | 95 | 100 | 105 | 100 | 102 | 105 |
| Noise performance (index) | 100 | 100 | 100 | 100 | 100 | 100 | 100 |
| Steering stability (index) | 110 | 105 | 100 | 80 | 80 | 95 | 80 |
| Comprehensive evaluation of durability and noise performance (index) | 180 | 195 | 200 | 205 | 200 | 202 | 205 |

The test results show that the Examples 9 to 14 can improve the noise performance and durability (better overall rating) compared to the comparative examples in Table 1. Furthermore, some examples which have, for the inner tread rubber, a better ratio between the maximum width W2 and the maximum width W1 of the noise damper, a better location of the outer edge, and a better ratio between the maximum thickness T2 and the maximum thickness T3 of the tread rubber have better balanced noise performance and durability than the other examples, and steering stability was also improved.

## Claims

1. A pneumatic tyre (1) comprising:
a tread portion (2) having a tread rubber (13) and a tyre inner cavity surface (9); wherein
the tread rubber (13) comprises an outer tread rubber (13A) having a ground-contacting surface (2S), and an inner tread rubber (13B) disposed inwardly in a tyre radial direction of the outer tread rubber (13A), and
a loss tangent tan δ of the inner tread rubber (13B) at 30 degrees C is smaller than a loss tangent tan δ of the outer tread rubber (13A) at 30 degrees C, wherein loss tangent tan δ at 30 degrees C is a value measured using a viscoelastic spectrometer under the provisions of JIS-K6394 at an initial distortion of 10%, a frequency of 10Hz, an amplitude of +/-2% , under tension deformation mode and at a temperature of 30 degrees C,
**characterized by** a noise damper (14) made of a porous material fixed to the tyre inner cavity surface (9), wherein
the inner tread rubber (13B) is disposed outwardly in the tyre radial direction of the noise damper (14), and
a pair of ends (13Bt) in a tyre axial direction of the inner tread rubber (13B) is arranged inwardly in the tyre axial direction of a pair of outer ends (14t) in the tyre axial direction of the noise damper (14).

2. The pneumatic tyre (1) according to claim 1, wherein
a maximum width (W2) in the tyre axial direction of the inner tread rubber (13B) is in a range from 70% to 90% of a maximum width (W1) in the tyre axial direction of the noise damper (14).

3. The pneumatic tyre (1) according to claim 1 or 2, wherein
the pair of ends (13Bt) in the tyre axial direction of the inner tread rubber (13B) is arranged inwardly in the tyre axial direction of a pair of tread edges (2t) of the tread portion (2).

4. The pneumatic tyre (1) according to any one of claims 1 to 3, wherein
the inner tread rubber (13B) has a maximum thickness (T2) equal to or less than 20% of a maximum thickness of the tread rubber (13).

5. The pneumatic tyre (1) according to any one of claims 1 to 4, wherein
a loss tangent tan δ of the inner tread rubber (13B) at 30 degrees C is equal to or less than 0.15.

6. The pneumatic tyre (1) according to any one of claims 1 to 5,
the tread rubber (13) further comprising a middle tread rubber (13C) between the outer tread rubber (13A) and the inner tread rubber (13B), wherein
the middle tread rubber (13C) has a loss tangent tan δ at 30 degrees C greater than the loss tangent tan δ of the outer tread rubber (13A) at 30 degrees C.

7. The pneumatic tyre (1) according to any one of claims 1 to 6, wherein
the noise damper (14) has a maximum width (W1) in the tyre axial direction in a range from 70% to 95% of a tread ground-contacting width (TW).

8. The pneumatic tyre (1) according to any one of claims 1 to 7, wherein
the noise damper (14) has a maximum thickness (T1) equal to or less than 70 mm.

## Patentansprüche

1. Luftreifen (1), umfassend:
einen Laufflächenabschnitt (2) mit einem Laufflächengummi (13) und einer Reifeninnenhohlraumfläche (9); wobei
der Laufflächengummi (13) einen äußeren Laufflächengummi (13A) mit einer Bodenkontaktfläche (2S) und einen inneren Laufflächengummi (13B) umfasst, der in einer Reifenradialrichtung von dem äußeren Laufflächengummi (13A) innen angeordnet ist, und
ein Verlusttangens tan δ des inneren Laufflächengummis (13B) bei 30 Grad C kleiner als ein Verlusttangens tan δ des äußeren Laufflächengummis (13A) bei 30 Grad C ist, wobei der Verlusttangens tan δ bei 30 Grad C ein Wert ist, der unter Verwendung eines Viskoelastizitätsspektrometers unter den Bestimmungen von JIS-K6394 bei einer anfänglichen Verzerrung von 10 %, einer Frequenz von 10 Hz, einer Amplitude von +/- 2 %, unter einem Zugverformungsmodus und bei einer Temperatur von 30 Grad C gemessen wird,
**gekennzeichnet durch** einen Geräuschdämpfer (14), der aus einem porösen Material hergestellt ist, das an der Reifeninnenhohlraumfläche (9) befestigt ist, wobei
der innere Laufflächengummi (13B) in der Reifenradialrichtung des Geräuschdämpfers (14) außen angeordnet ist, und
ein Paar Enden (13Bt) in einer Reifenaxialrichtung des inneren Laufflächengummis (13B) in der Reifenaxialrichtung eines Paars äußere Enden (14t) in der Reifenaxialrichtung von dem Geräuschdämpfer (14) innen angeordnet ist.

2. Luftreifen (1) nach Anspruch 1, wobei
eine maximale Breite (W2) in der Reifenaxialrichtung des inneren Laufflächengummis (13B) in einem Bereich von 70 % bis 90 % einer maximalen Breite (W1) in der Reifenaxialrichtung des Geräuschdämpfers (14) liegt.

3. Luftreifen (1) nach Anspruch 1 oder 2, wobei
das Paar Enden (13Bt) in der Reifenaxialrichtung des inneren Laufflächengummis (13B) in der Reifenaxialrichtung eines Paars Laufflächenkanten (2t) des Laufflächenabschnitts (2) innen angeordnet ist.

4. Luftreifen (1) nach einem der Ansprüche 1 bis 3, wobei
der innere Laufflächengummi (13B) eine maximale Dicke (T2) aufweist, die gleich oder kleiner als 20 % einer maximalen Dicke des Laufflächengummis (13) ist.

5. Luftreifen (1) nach einem der Ansprüche 1 bis 4, wobei
ein Verlusttangens tan δ des inneren Laufflächengummis (13B) bei 30 Grad C gleich oder kleiner als 0,15 ist.

6. Luftreifen (1) nach einem der Ansprüche 1 bis 5, wobei
der Laufflächengummi (13) ferner einen mittleren Laufflächengummi (13C) zwischen dem äußeren Laufflächengummi (13A) und dem inneren Laufflächengummi (13B) umfasst, wobei
der mittlere Laufflächengummi (13C) einen Verlusttangens tan δ bei 30 Grad C aufweist, der größer als der Verlusttangens tan δ des äußeren Laufflächengummis (13A) bei 30 Grad C ist.

7. Luftreifen (1) nach einem der Ansprüche 1 bis 6, wobei
der Geräuschdämpfer (14) eine maximale Breite (W1) in der Reifenaxialrichtung in einem Bereich von 70 % bis 95 % einer Laufflächenbodenkontaktfläche (TW) aufweist.

8. Luftreifen (1) nach einem der Ansprüche 1 bis 7, wobei
der Geräuschdämpfer (14) eine maximale Dicke (T1) aufweist, die gleich oder kleiner als 70 mm ist.

## Revendications

1. Bandage pneumatique (1) comprenant :
une portion formant bande de roulement (2) ayant un caoutchouc de bande de roulement (13) et une surface de cavité interne du pneumatique (9) ; dans lequel
le caoutchouc de bande de roulement (13) comprend un caoutchouc de bande de roulement extérieur (13A) ayant une surface de contact au sol (2S), et un caoutchouc de bande de roulement intérieur (13B) disposé à l'intérieur dans une direction radiale du pneumatique du caoutchouc de bande de roulement extérieur (13A), et
une tangente de perte tan δ du caoutchouc de bande de roulement intérieur (13B) à 30 degrés C est inférieure à une tangente de perte tan δ du caoutchouc de bande de roulement extérieur (13A) à 30 degrés C, la tangente de perte tan δ à 30 degrés C étant une valeur mesurée à l'aide d'un spectromètre de viscoélasticité conformément aux dispositions de la norme industrielle japonaise JIS-K6394 à une contrainte initiale de 10 %, une fréquence de 10 Hz, une amplitude de ±2 %, dans un mode de déformation en traction et à une température de 30 degrés C,
**caractérisé par** un amortisseur de bruit (14) fait d'un matériau poreux fixé sur la surface de cavité interne du pneumatique (9), dans lequel
le caoutchouc de bande de roulement intérieur (13B) est disposé à l'extérieur dans la direction radiale du pneumatique de l'amortisseur de bruit (14), et
une paire d'extrémités (13Bt) dans une direction axiale du pneumatique du caoutchouc de bande de roulement intérieur (13B) est agencée à l'intérieur dans la direction axiale du pneumatique d'une paire d'extrémités extérieures (14t) dans la direction axiale du pneumatique de l'amortisseur de bruit (14).

2. Bandage pneumatique (1) selon la revendication 1, dans lequel
une largeur maximum (W2) dans la direction axiale du pneumatique du caoutchouc de bande de roulement intérieur (13B) est dans une plage allant de 70 % à 90 %d'une largeur maximum (W1) dans la direction axiale du pneumatique de l'amortisseur de bruit (14).

3. Bandage pneumatique (1) selon la revendication 1 ou 2, dans lequel
la paire d'extrémités (13Bt) dans la direction axiale du pneumatique du caoutchouc de bande de roulement intérieur (13B) est agencée à l'intérieur dans la direction axiale du pneumatique d'une paire de bords de bande de roulement (2t) de la portion formant bande de roulement (2).

4. Bandage pneumatique (1) selon l'une quelconque des revendications 1 à 3, dans lequel
le caoutchouc de bande de roulement intérieur (13B) a une épaisseur maximum (T2) égale ou inférieure à 20 % d'une épaisseur maximum du caoutchouc de bande de roulement (13).

5. Bandage pneumatique (1) selon l'une quelconque des revendications 1 à 4, dans lequel
une tangente de perte tan δ du caoutchouc de bande de roulement intérieur (13B) à 30 degrés C est égale ou inférieure à 0,15.

6. Bandage pneumatique (1) selon l'une quelconque des revendications 1 à 5, dans lequel
le caoutchouc de bande de roulement (13) comprend en outre un caoutchouc de bande de roulement médian (13C) entre le caoutchouc de bande de roulement extérieur (13A) et le caoutchouc de bande de roulement intérieur (13B), dans lequel
le caoutchouc de bande de roulement médian (13C) a une tangente de perte tan δ à 30 degrés C supérieure à la tangente de perte tan δ du caoutchouc de bande de roulement extérieur (13A) à 30 degrés C.

7. Bandage pneumatique (1) selon l'une quelconque des revendications 1 à 6, dans lequel
l'amortisseur de bruit (14) a une largeur maximum (W1) dans la direction axiale du pneumatique dans une plage allant de 70 % à 95 % d'une largeur de contact au sol de bande de roulement (TW).

8. Bandage pneumatique (1) selon l'une quelconque des revendications 1 à 7, dans lequel
l'amortisseur de bruit (14) a une épaisseur maximum (T1) égale ou inférieure à 70 mm.
